# EUROPEAN PATENT SPECIFICATION

(11) **EP 2 083 465 B1**
(45) Date of publication and mention of the grant of the patent: **01.08.2012**
(21) Application number: 08100806.2
(22) Date of filing: 23.01.2008
(51) Int. Cl.: H01M 4/86, H01M 4/88, H01M 8/12

(54) **A Process for Fabrication of a Fully Dense Electrolyte layer embedded in membrane electrolyte assembly of solid oxide fuel cell**
Verfahren zur Herstellung einer vollständig dichten, in eine Membran-Elektrolyt-Baugruppe einer Festoxid-Brennstoffzelle eingebettete Elektrolytschicht
Procédé de fabrication d'une couche d'électrolyte complètement dense intégrée à un ensemble membrane-électrolyte d'une pile à combustible à oxyde solide

(43) Date of publication of application: 29.07.2009
(73) Proprietor: Institute of Nuclear Energy Research, Longtan Township, T'ao yuan 32546 (TW)
(72) Inventor: Kao, Wei-Xin Inst. of Nuclear Energy Research, Taoyuan County 32546 (TW); Lee, Maw-Chwain Inst. of Nuclear Energy Research, Taoyuan County 32546 (TW); Lin, Tai-Nan Inst. of Nuclear Energy Research, Taoyuan County 32546 (TW); Wang, Chun-Hsiu Inst. of Nuclear Energy Research, Taoyuan County 32546 (TW); Chang, Yang-Chuang Inst. of Nuclear Energy Research, Taoyuan County 32546 (TW); Lin, Li-Fu Inst. of Nuclear Energy Research, Taoyuan County 32546 (TW)
(74) Representative: Lang, Christian

(56) References cited:
- EP-A- 1 433 767
- EP-A- 1 699 104
- WO-A-01/49485
- US-A1- 2003 232 230
- US-A1- 2006 113 034

## Description

### Background of the Invention

### 1. Field of the Invention

The invention relates to a manufacturing technology for the electrolyte layer in a solid oxide fuel cell (SOFC). It refers to a membrane fabrication method that primarily uses tape casting process and is assisted with processes like sputtering coating, screen printing, spin coating or plasma spray coating. With design and control for sintering condition, the invention enables a process for successful preparation of fully dense electrolyte layer that will be embedded in a high performance membrane electrolyte assembly.

### 2. Description of the Prior Art

With rising oil price and growing consciousness of environmental protection, renewable energy technology is one of the most important technologies in the century. Solid oxide fuel cell is a power generation system with high efficiency, low pollution and diversified energy source. It has become the power generation system that has the most development potential because its features like simple material composition, modulized structure and stable and sustainable power generation.

The operation temperature for an Electrolyte Supported Cell (ESC) that uses YSZ for electrolyte support is 800 ~ 1000°C. The thickness for its electrolyte layer is about 150 ~ 300µm. This is the first-generation SOFC-MEA. The operation temperature for an Anode Supported Cell (ASC) that uses anode material, NiO + YSZ, for anode support is about 650 - 800°C. The thickness for its electrolyte layer (YSZ as primary material) is about 10µm. This is the second-generation SOFC-MEA. NiO + 8YSZ is the anode material for ASC/ESC. The cathode material is mainly LSM and LSCF and about 30 ~ 60µm thick. Many researchers in the world are actively developing new electrolyte materials and cathode materials. It is expected that new materials could lower the operation temperature for SOFC-MEA to about 500~700°C. Then, the parts in SOFC stack, like interconnector, could use metallic materials to replace ceramic materials. The benefits include not only easy manufacturing but also increased mechanical strength/ stability/durability, as well as decreased overall cost for SOFC. The technological development in universities and national laboratories emphasize material development, which expects new materials to lower resistance, increase ionic/ electrical conductivity, and improve SOFC power

REP 1 433 767 A, US 2003/232230 A1, US 2006i113034 A1, EP 1 699 104 A, and WO 01/49485 A disclose a manufacturing process for producing a planar SOFC having a fully dense efectrolyte layer involving the steps of tape casting, laminating and sintering.

### Summary of the Invention

The main objective for the invention is to develop the manufacturing process for a fully dense electrolyte layer for SOFC-MEA. This object is solved by the manufacturing process according to claim 1. Advantages improvements of said process are presented by the dependent claims.

To achieve the above objective, a tape casting process is proposed as the membrane fabrication method, which is also assisted with sputtering coating, screen printing, spin coating or plasma spray coating. The mentioned process under specially designed and controlled sintering condition can successfully produce a fully dense electrolyte layer. Take Anode Supported Cell (ASC) as example. The invented process uses tape casting to produce electrolyte green tape, which through lamination is securely put onto anode green tape. The anode/electrolyte composite green tape is subject to high-temperature sintering to produce half cell. Then, screen printing is used to coat cathode layer onto the electrolyte surface of the half cell. This will conclude the manufacturing of a fully dense electrolyte layer for a solid oxide fuel cell that is also anode supported cell. The SOFC-MEA produced from this process has high performance, durability and stability, which can be verified by performance test of SDFC-MEEA.

### Brief Description of the Drawings

The present invention will be apparent to those skilled in the art by reading the following description of a preferred embodiment thereof, with reference to the accompanying drawings, in which:
Figure 1: a simple illustration for the manufacturing process in the invention;
Figure 2: SEM picture for cross-sectional microstructure of a completed solid oxide fuel cell by membrane technology at specially designed and controlled sintering condition; and
Figure 3: testing result for the electrical performance for the solid oxide fuel cell in the invention.

### Detailed Description of the Preferred Embodiment

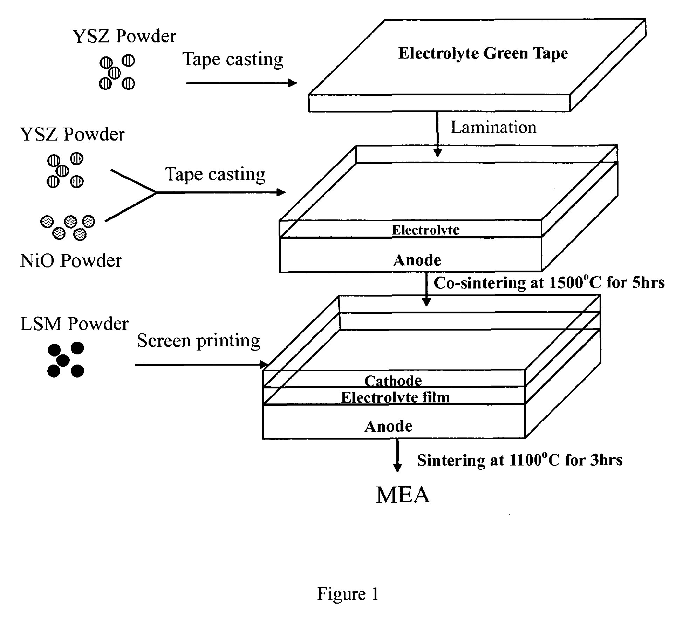

The invention is to produce planar solid oxide fuel cell (SOFC- MEA), a unit cell, which has embedded fully dense/zero gas leakage rate or airtight electrolyte (like 8YSZ/GDC/YDC/LSGM etc.). The implementation for such process is described as follows:
Step 1: Use tape casting process to produce planar SOFC-MEA anode and electrolyte green tape. Cut and laminate the electrolyte green tape (5 ~ 300µm) and anode green tape (600 ~ 1200µm) to produce SOFC half cell. Conduct sintering at about 1200°C ~ 1600°C (preferably at 1500°C) for several hours (more than 3 hours) to produce the first-stage ceramic half cell. In this stage, the electrolytes can be YSZ, GDC, YDC, SmDC and LSGM. Use scanning electronic microscope (SEM) to analyze the microstructure for the half cell to assure the electrolyte layer reaches a microstructure that is open pore free and fully dense.
Step 2: On the electrolyte layer of the half cell, use screen printing process to build a porous cathode layer (usually the material is LSM or LSCF). Then conduct sintering at about 1200°C for about 3 hours to complete the manufacturing of SOFC-MEA. The above process is to manufacture SOFC-MEA that has a fully dense and airtight electrolyte layer. A simple process flow diagram for Step 1 and Step 2 above is shown in Figure 1.

The following describes in details the embodiment for the invention:

### (Embodiment 1)

Step 1: A process to manufacture SOFC-MEA for solid oxide fuel cell (unit cell) that has a fully dense/ airtight electrolyte layer (8YSZ/GDC/LSGM). The anode for this MEA is made from 50wt% NiO + 50wt% 8YSZ and a specific amount of pore former (graphite). Tape casting process is used to produce electrode green tape. Lamination process makes the tape 1000 µm thick and 5x5 cm²~10x10 cm² in size with 13.79~148.24MPa (2000~21500psi). 50 ~ 100°C and system vacuum about 1.33×(10⁻⁴ ~10⁻¹⁰)MPa ( 1 ~ 10⁻⁶ torrs). The electrode green tape can be anode or electrolyte green tape. Its material can be, but not limited to, YSZ + NiO, GDC + NiO, LSGM + NiO, SDC + NiO, YDC + NiO and YSZ, GDC, LSGM, SDC, YDC et al, respectively.

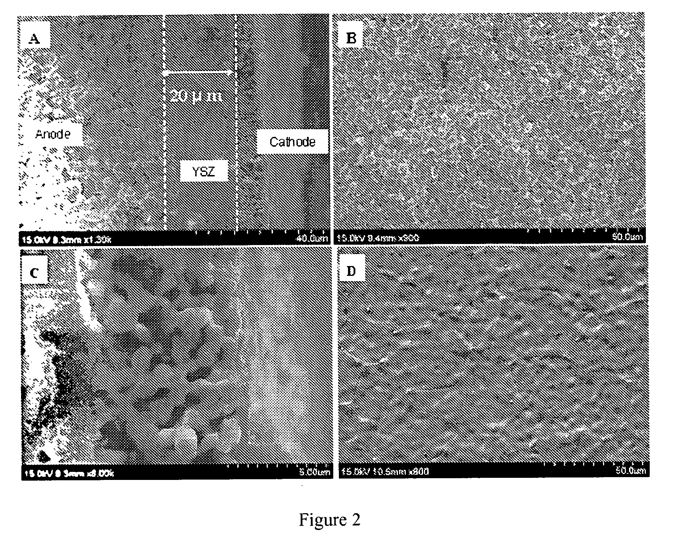

Step 2: Build the electrolyte green tape in membrane (5 - 300µm) firmly onto the electrode to produce SOFC half cell. Conduct sintering at about 1200°C - 1600°C (preferably 1400°C) for several hours (more than 3 hours) to produce ceramic half cell in the first stage. Then conduct SEM analysis on microstructure to assure that the electrolyte layer has reached the microstructure that is open pore free. As shown in Figure 2, the thickness of electrolyte layer is about 20µm, which is a fully dense and airtight structure that can meet the requirement for SOFC-MEA electrolyte layer. The remaining closed fine pores do not affect the requirement for zero gas leakage rate.

Step 3: To assure the airtightness for the electrolyte layer, measure the gas leakage rate for the half cell obtained from Step 2. When the gas leakage rate is below 1 × 10⁻⁶ L/cm²/sec, it is to assure that the electrolyte layer is fully dense. The half cell with fully dense electrolyte layer is named HC-fd.

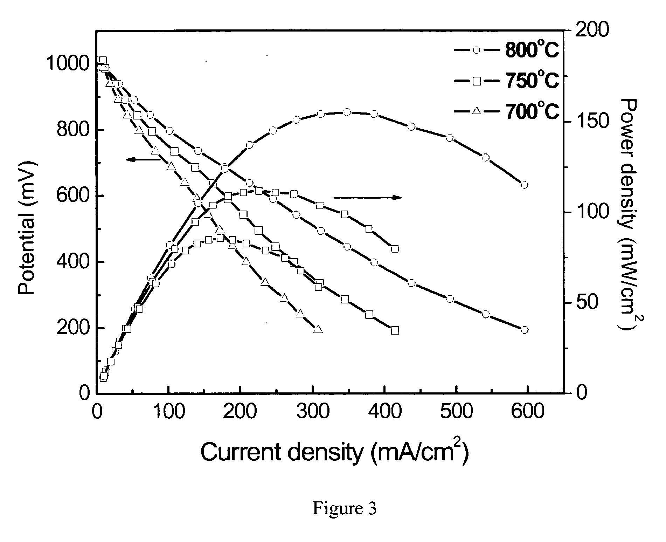

Step 4: On the electrolyte layer of HC-fd, use screen printing process to build on a porous layer of cathode LSM material. Then conduct sintering at about 1200°C for 3 hrs. The sintering temperature rising/dropping rate can be, but not limited to, 3°C/min. This will complete the manufacturing of high-performance SOFC-MEA (Unit cell). The microstructure for the unit cell analyzed by SEM is shown in Figure 2. The testing result for electrical performance for the produced SOFC-MEA is shown in Figure 3. It indicates that OCV (1.037 ~ 1.016V) has reached the theoretical value, maximum power density is larger than 150mW/cm², indicating the excellence of the manufacturing process, innovation and technical criticalness for the invention have met the patent requirements. Therefore, the application is submitted.

The above description is only for an embodiment of the invention, but not to limit the scope of the invention. Those modifications and changes with equivalent effect to the description of the invention shall be all covered in the scope of the invention.

## Claims

1. A manufacturing process for producing a planar solid oxide fuel cell (SOFC-MEA) having a fully dense electrolyte layer, comprising steps:
a. Producing planar SOFC-MEA anode and electrolyte green tapes by tape casting;
b. Building electrolyte green tape thin layer onto the electrode green tape and producing SOFC green half cell by laminating with specific pressure, temperature and system vacuum;
c. Combining green tapes of electrolyte and electrode tightly; the anode/electrolyte composite green tape is subject to high-temperature sintering to produce ceramic half cell at temperature 1500_°C for 5 hours; inspecting the structure of the half cell, if open pores still exist, spin coat or sputter coat additional electrolyte material onto the electrolyte layer and subject the sintered half SOFC half cell to further sintering until fully dense electrolyte layer is achieved, wherein the inspection uses SEM to inspect the microstructure of the half cell, including measurement of gas leakage rate, which is under 1 x 10⁻⁶ L/cm²/sec for fully dense/airtight electrolyte layer;
d. Building a layer of cathode material onto the electrolyte layer of half cell using screen printing process, and sinter the half cell with the printed cathode layer at 1200 °C for 3 hours, wherein the sintering temperature rising/dropping rate is 3°C/min.

2. A manufacturing process as described in claim 1 for producing a planar solid oxide fuel cell having a fully dense electrolyte layer, wherein the electrolyte materials include YSZ, GDC, LSGM, SDC and YDC.

3. A manufacturing process as described in claim 1 for producing a planar solid oxide fuel cell having a fully dense electrolyte layer, wherein the electrode green tape to prepare SOFC in Step a is anode or electrolyte green tape, the materials include YSZ+NiO, GDC + NiO, LSGM+NiO, SDC + NiO, YDC+NiO and YSZ, GDC, LSGM, SDC, and YDC.

4. A manufacturing process as described in claim 1 for producing a planar solid oxide fuel cell having a fully dense electrolyte layer, the anode catalytic material is NiO, and the electrolyte weight ratio is 30 ~ 60wt%.

5. A manufacturing process as described in claim 1 for producing a planar solid oxide fuel cell having a fully dense electrolyte layer, wherein the anode catalytic material is NiO.

6. A manufacturing process as described in claim 1 for producing a planar solid oxide fuel cell having a fully dense electrolyte layer, wherein Step b builds electrolyte membrane green tape onto electrode green tape, or electrode membrane green tape onto the electrolyte green tape.

7. A, manufacturing process as described in claim 1 for producing a planar solid oxide fuel cell having a fully dense electrolyte layer, wherein the process in Step b to build SOFC electrolyte layer onto electrode layer by laminating with 13.79~148.24MPa (2000~21500psi), 50~100°C and system vacuum 1.33×(10⁻⁴ ~ 10⁻¹⁰) Pa (1 ~ 10⁻⁶torrs).

8. A manufacturing process as described in claim 1 for producing a planar solid oxide fuel cell having a fully dense electrolyte layer, wherein the sintering process in Step c is 1500°C for 5 hours in high-temperature furnace that circulates air or other gases.

9. A manufacturing process as described in claim 1 for producing a planar solid oxide fuel cell having a fully dense electrolyte layer, wherein the process in Step d uses screen printing to build a layer of cathode material onto the electrolyte layer of half cell.

10. A manufacturing process as described in claim 1 for producing a planar solid oxide fuel cell having a fully dense electrolyte layer, wherein Step d the cathode material is LSM and LSCF.

11. A manufacturing process as described in claim 1 for producing a planar solid oxide fuel cell having a fully dense electrolyte layer, wherein Step d the thickness of cathode layer is 30~50µm.

## Patentansprüche

1. Herstellungsprozess zur Herstellung einer planaren Festoxid-Brennstoffzellmembran (SOFC-MEA) mit einer voll kompakten Elektrolytschicht, umfassend die Schritte:
a. Herstellung einer planaren SOFC-MEA-Anode und grüner Elektrolytfolien durch Foliengießen;
b. Aufbau einer dünnen Schicht einer grünen Elektrolytfolie auf der grünen Elektrodenfolie und Herstellung einer grünen SOFC-Halbzelle durch Laminieren unter spezifischem Druck, Temperatur und Systemvakuum;
c. Enganliegendes Kombinieren der grünen Elektrolyt- und Elektrodenfolien; der Schichtkörper aus grüner Anoden-/Elektrolytfolie ist Gegenstand von Hoch-Temperatur-Sintern, um bei Temperaturen von 1500 °C über fünf Stunden eine keramische Halbzelle zu produzieren; Überprüfen der Halbzellen-Struktur, ob offene Poren immer noch existieren, Spin-Coating oder Sputter-Beschichtung mit zusätzlichem Elektrolytmaterial auf der Elektrolytschicht und Unterziehen der gesinterten halben SOFC-Halbzelle einem weiteren Sintern, bis eine komplett dichte Elektrolytschicht erreicht wird, wobei beim Überprüfen SEM verwendet wird, um die Mikrostruktur der Halbzelle zu überprüfen, einschließlich der Messung der Gas-Leckrate, die unter 1 × 10⁻⁶ L/cm²/sec für eine komplett dichte/luftdichte Elektrolytschicht liegt;
d. Aufbau einer Schicht eines Kathodenmaterials auf der Elektrolytschicht der Halbzelle, unter Verwendung eines Siebdruckverfahrens, und Sintern der Halbzelle mit der gedruckten Kathodenschicht bei 1200 °C für drei Stunden, wobei die Erhöhungs-/Absenkungsrate der Sintertemperatur 3 °C/min beträgt.

2. Herstellungsprozess, wie im Anspruch 1 beschrieben, zur Herstellung einer planaren Festoxid-Brennstoffzelle mit einer komplett dichten Elektrolytschicht, wobei die Elektrolytmaterialien YSZ, GDC, LSGM, SDC und YDC einschließen.

3. Herstellungsprozess, wie im Anspruch 1 beschrieben, zur Herstellung einer planaren Festoxid-Brennstoffzelle mit einer komplett dichten Elektrolytschicht, wobei die grüne Elektrodenfolie zur Vorbereitung von SOFC im Schritt a eine grüne Anoden- oder Elektrolytfolie ist, und die Materialien YSC + NiO, GDC + NiO, LSGM + NiO, SDC + NiO, YDC + NiO und YSZ, GDC, LSGM, SDC, und YDC einschließen.

4. Herstellungsprozess, wie im Anspruch 1 beschrieben, zur Herstellung einer planaren Festoxid-Brennstoffzelle mit einer komplett dichten Elektrolytschicht, wobei das katalytische Material der Anode NiO ist, und der Anteil des Elektrolytgewichts 30 bis 60 GewichtsProzent beträgt.

5. Herstellungsprozess, wie im Anspruch 1 beschrieben, zur Herstellung einer planaren Festoxid-Brennstoffzelle mit einer komplett dichten Elektrolytschicht, wobei das katalytische Anodenmaterial NiO ist.

6. Herstellungsprozess, wie im Anspruch 1 beschrieben, zur Herstellung einer planaren Festoxid-Brennstoffzelle mit einer komplett dichten Elektrolytschicht, wobei im Schritt b eine grüne Elektrolytmembranfolie auf einer grünen Elektrodenfolie angeordnet wird, oder eine grüne Elektrodenmembranfolie auf der grünen Elektrolytfolie.

7. Herstellungsprozess, wie im Anspruch 1 beschrieben, zur Herstellung einer planaren Festoxid-Brennstoffzelle mit einer komplett dichten Elektrolytschicht, wobei im Verfahrensschritt b eine SOFC-Elektrolytschicht auf einer Elektrodenschicht durch Laminieren mit 13,79~148,24MPa (2000~21500psi), 50~100°C und einem Systemvakuum von 1,33×(10⁻⁴~10⁻¹⁰) Pa (1 ~ 10⁻⁶ Torr) angeordnet wird.

8. Herstellungsprozess, wie im Anspruch 1 beschrieben, zur Herstellung einer planaren Festoxid-Brennstoffzelle mit einer komplett dichten Elektrolytschicht, wobei der Sinterprozess im Verfahrensschritt c 1500 °C für fünf Stunden in einem Hoch-Temperatur-Ofen beträgt, der Luft oder andere Gase zirkuliert.

9. Herstellungsprozess, wie im Anspruch 1 beschrieben, zur Herstellung einer planaren Festoxid-Brennstoffzelle mit einer komplett dichten Elektrolytschicht, wobei im Verfahrensschritt d Siebdruck verwendet wird, um eine Schicht aus Kathodenmaterial auf der Elektrolytschicht der Halbzelle anzuordnen.

10. Herstellungsprozess, wie im Anspruch 1 beschrieben, zur Herstellung einer planaren Festoxid-Brennstoffzelle mit einer komplett dichten Elektrolytschicht, wobei das Kathodenmaterial im Schritt d LSM und LSCF ist.

11. Herstellungsprozess, wie im Anspruch 1 beschrieben, zur Herstellung einer planaren Festoxid-Brennstoffzelle mit einer komplett dichten Elektrolytschicht, wobei im Schritt d die Dicke der Kathodenschicht 30 bis 50 µm beträgt.

## Revendications

1. Procédé de fabrication pour produire une pile à combustible à oxyde solide (SOFC-MEA) plane ayant une couche d'électrolyte entièrement dense, comprenant les étapes consistant à :
a. produire une anode SOFC-MEA plane et des bandes vertes d'électrolyte par coulage en bande ;
b. monter une couche mince de bande verte d'électrolyte sur la bande verte d'électrolyte et produire une pile à moitié verte de SOFC par laminage à une pression, une température et un vide systémique spécifiques ;
c. combiner fermement des bandes vertes d'électrolyte et l'électrode ; la bande verte composite anode/électrolyte est soumise à un frittage à haute température pour produire une moitié de pile en céramique à une température de 1500 °C pendant 5 heures ; inspecter la structure de la moitié de pile et en présence de pores toujours ouverts, déposer en vrille ou par crachotement un revêtement supplémentaire du matériau d'électrolyte sur la couche d'électrolyte et soumettre la moitié de pile SOFC à demi frittée à un nouveau frittage jusqu'à obtention d'une couche d'électrolyte entièrement dense, l'inspection utilisant un microscope SEM pour inspecter la microstructure de la demi-pile, y compris la mesure de taux de fuite de gaz inférieur à 1x10⁻⁶ L/cm²/sec pour une couche d'électrolyte entièrement dense/étanche à l'air ;
d. former un matériau de couche de cathode sur la couche d'électrolyte de la demi-pile à l'aide d'un procédé de sérigraphie et fritter la couche de cathode de la demi-pile à 1200 °C pendant trois heures, la vitesse d'augmentation/baisse de la température de frittage étant de 3°C/min.

2. Procédé de fabrication selon la revendication 1, pour produire une pile à combustible à oxyde solide plane ayant une couche d'électrolyte entièrement dense, les matériaux d'électrolyte comprenant les matériaux YSZ, GDC, LSGM, SDC et YDC.

3. Procédé de fabrication selon la revendication 1, pour produire une pile à combustible à oxyde solide plane ayant une couche d'électrolyte entièrement dense, la bande verte d'électrolyte servant à préparer le SOFC à l'étape a étant une anode ou une bande verte d'électrolyte, les matériaux comprenant les matériaux YSZ + NiO, GDC + NiO, LSGM + NiO, SDC + NiO, YDC + NiO et YSZ, GDC, LSGM, SDC et YDC.

4. Procédé de fabrication selon la revendication 1, pour produire une pile à combustible à oxyde solide plane ayant une couche d'électrolyte entièrement dense, le matériau catalytique de l'anode étant le NiO et le ratio pondéral de l'électrolyte étant de 30 - 60 % poids.

5. Procédé de fabrication selon la revendication 1, pour produire une pile à combustible à oxyde solide plane ayant une couche d'électrolyte entièrement dense, le matériau catalytique de l'anode étant le NiO.

6. Procédé de fabrication selon la revendication 1, pour produire une pile à combustible à oxyde solide plane ayant une couche d'électrolyte entièrement dense, l'étape b permettant de montrer une bande verte de membrane d'électrolyte sur une bande verte d'électrode, ou une bande verte de membrane d'électrode sur la bande verte d'électrolyte.

7. Procédé de fabrication selon la revendication 1, pour produire une pile à combustible à oxyde solide plane ayant une couche d'électrolyte entièrement dense, le procédé à l'étape b pour monter la couche d'électrolyte SOFC sur une couche d'électrode par laminage 13,79~148,24 MPa (2000~21500 psi), 50~100°C et vide systémique 1,33 x (10⁻⁴ ~ 10⁻¹⁰) Pa (1 ~ 10⁻⁶ tonnes).

8. Procédé de fabrication selon la revendication 1, pour produire une pile à combustible à oxyde solide plane ayant une couche d'électrolyte entièrement dense, le procédé de frittage mis en oeuvre à l'étape c consistant à mettre la pile à 1500°C pendant 5 heure dans un four à haute température à circulation d'air ou d'autres gaz.

9. Procédé de fabrication selon la revendication 1, pour produire une pile à combustible à oxyde solide plane ayant une couche d'électrolyte entièrement dense, le procédé mis en oeuvre à l'étape d utilisant la sérigraphie pour monter un matériau de couche de cathode sur la couche d'électrolyte de la demi-pile.

10. Procédé de fabrication selon la revendication 1, pour produire une pile à combustible à oxyde solide plane ayant une couche d'électrolyte entièrement dense, le matériau de la cathode utilisé à l'étape d étant le LSM et le LSCF.

11. Procédé de fabrication selon la revendication 1, pour produire une pile à combustible à oxyde solide plane ayant une couche d'électrolyte entièrement dense, l'épaisseur de la couche de cathode de l'étape d étant de 30-50 µm.
